# EUROPÄISCHE PATENTSCHRIFT

(11) **EP 0 331 895 B1**
(45) Veröffentlichungstag und Bekanntmachung des Hinweises auf die Patenterteilung: **24.03.1993**
(21) Anmeldenummer: 89101512.5
(22) Anmeldetag: 28.01.1989
(51) Int. Cl.: B23Q 3/10

(54) **Aufspannvorrichtung mit Aufnahmeprisma für Werkstücke**
Clamping device with supporting prisms for work pieces
Dispositif de serrage avec des prismes de préhension de pièces à usiner

(30) Priorität: 08.03.1988 DE 3807554; 01.06.1988 DE 8807176 U
(43) Veröffentlichungstag der Anmeldung: 13.09.1989
(73) Patentinhaber: Horst Witte Entwicklungs- und Vertriebs-KG, 21369 Nahrendorf (DE)
(72) Erfinder: Witte, Horst, D-2122 Bleckede/OT Radegast (DE)
(74) Vertreter: von Raffay, Vincenz, Dipl.-Ing.

(56) Entgegenhaltungen:
- FR-A- 2 332 098
- US-A- 3 584 860
- US-A- 4 445 678

## Beschreibung

Die Erfindung betrifft eine Aufspannvorrichtung mit Aufnahmeprisma nach dem Oberbegriff des Patentanspruches 1.

Aus der FR-A-2 332 098 ist eine Aufspannvorrichtung der vorstehend genannten Art bekannt, bei der die Breite der die Dachform aufweisenden Querschnittsfläche größer ist als der Abstand der Bohrungen in der Grundplatte. Ein bestimmtes Verhältnis zwischen der Breite und dem Abstand ist hier nicht festgelegt. Es ist möglich, durch die Aufnahmeprismen dieser bekannten Aufspannvorrichtung Werkstücke mit unterschiedlichen Abmessungen und Durchmessern aufzuspannen. Dieses wird dadurch erreicht, daß die Dachflächen der Aufnahmeprismen unterschiedliche Neigung aufweisen. Durch Zuordnung dieser unterschiedlich geneigten Dachflächen zu den entsprechenden Werkstücken wird für eine Aufspannung mit einer möglichst wirksamen Anlage gesorgt.

Aus der US-A-3 584 860 ist es grundsätzlich bekannt, einen Riemen oder dergleichen zum Aufspannen von Werkstücken auf dachförmigen Aufnahmeflächen einzusetzen.

Der Erfindung liegt die Aufgabe zugrunde, eine Aufspannvorrichtung der eingangs genannten Art zu schaffen, deren Aufnahmeprismen einfach aufgebaut sind und unter Berücksichtigung des regelmäßigen Koordinatenabstandes der Bohrungen eine sichere Aufspannung unterschiedlichster Werkstücke gewährleisten.

Diese Aufgabe wird durch die Merkmale des Anspruches 1 gelöst.

Erfindungsgemäß ist ein einfaches Aufnahmeprisma vorhanden, das in seiner Breite dem Koordinatenabstand der Bohrungen angepaßt ist. Die Aufnahmeprismen sind einfach aufgebaut und sie können unter Berücksichtigung des Koordinatenabstandes in entsprechenden "Schritten" so angeordnet werden, daß Werkstücke unterschiedlicher Abmessungen und mit unterschiedlichen Durchmessern sicher und fest aufgespannt werden können. Der Winkel zwischen den nach oben und außen vorstehenden Dach- oder Werkstückauflageflächen ist immer kleiner als 180°, vorzugsweise liegt er zwischen 120 und 90°. Zum Aufspannen von Werkstücken sind immer zwei feststehende, d.h. unverrückbar befestigte, Aufnahmeteile vorhanden, wobei der Abstand zwischen diesen Aufnahmeteilen unter Berücksichtigung des durch die Koordinatenabstände bestimmten Rastermaßes so eingestellt werden kann, daß das Werkstück optimal (tangential) auf den Werkstückauflageflächen aufliegt. Dadurch, daß der Abstand zwischen zwei Aufnahmeteilen mit dem angegebenen Rastersprung in Anpassung an die Abmessung des Werkstückes gewählt werden kann, ist es möglich, das Werkstück immer sicher und fest und mit möglichst geringer Raumbeanspruchung aufzuspannen. Gleichzeitig können die unterschiedlichen Werkstücke auf einer Grundplatte befestigt werden.

Normalerweise sind zwei Werkstückauflageflächen, die im Querschnitt die Dachform bilden, auf einem Aufnahmeteil vorgesehen. Es ist aber auch möglich, mehr als zwei, nämlich vier usw., Werkstückauflageflächen auf einem Aufnahmeteil vorzusehen.

Wenn die Aufspannvorrichtung so ausgebildet ist, wie in Anspruch 3 unter Schutz gestellt, wird kein starres Spanneisen zum Halten oder Anpressen des oder der Werkstücke eingesetzt, das eine geringe Berührungsfläche und damit eine große Flächenpressung mit dem Werkstück aufweist, sondern es wird ein Spannseil um das Werkstück mit Hilfe der Aufwickelvorrichtungen geschlungen, so daß das Werkstück über einen großen Teil seines Umfanges sicher und schonend gehalten wird. Dies ist insbesondere bei Meßmaschinen von Vorteilen, bei denen eine hohe Präzision verlangt wird, d.h. das Werkstück darf beim Aufspannen nicht verformt werden.

In vorteilhafter Weise kann diese Aufspannvorrichtung so ausgestaltet sein, wie in Anspruch 4 angegeben, dann dienen die Haken dazu, das Spannseil zwischen den einzelnen Werkstücken niederzuhalten und so für eine Aufspannung über einen möglichst großen Umfang des Werkstückes zu sorgen.

Die Haken werden in vorteilhafter Weise in Bohrungen in den Aufnahmeteilen eingehängt (Anspruch 5).

Die Aufwickelvorrichtungen weisen einen Zapfen auf, der drehbar gelagert ist und eine Haspel bildet, die selbsthemmend ist, so daß verhindert wird, daß sich der Zapfen nach dem Spannen des Spannseils ungewollt zurückdreht, um so sicherzustellen, daß die Aufspannung nicht unerwünscht wieder gelöst wird (Ansprüche 6 und 7).

Im folgenden wird die Erfindung unter Hinweis auf die Zeichnung anhand verschiedener Ausführungsbeispiele näher erläutert.

Es zeigt:
- Fig. 1: eine teilweise geschnittene Seitenansicht auf vier Aufnahmeteile nach der Erfindung mit Werkstücken, befestigt auf einer Grundplatte;
- Fig. 2: einen Haken zum Spannen und Niederhalten eines Spannseils in Seitenansicht;
- Fig. 3: eine Aufwickelvorrichtung für das Spannseil;
- Fig. 4: eine Seitenansicht auf die Querschnittsfläche von zwei Aufnahmeteilen, angeordnet auf einer Grundplatte, deren Befestigungsbohrungen einen bestimmten, ein Rastermaß festlegenden, Abstand aufweisen;
- Fig. 5: eine der Fig. 4 entsprechende Seitenansicht jedoch in einer anderen Anordnung der Aufnahmeteile auf der Grundplatte;
- Fig. 6: eine den Fig. 4 und 5 entsprechende Seitenansicht, jedoch in einer weiteren Anordnung der Aufnahmeteile auf der Grundplatte;
- Fig. 7: eine Draufsicht auf zwei Aufnahmeteile auf einer Grundplatte zur Abstützung eines kegelförmigen Werkstückes;
- Fig. 8: eine Seitenansicht einer Ausführungsform mit mehr als zwei Aufspannflächen auf einem Aufnahmeteil;
und
- Fig. 9: eine Seitenansicht einer Ausführungsform, bei der die Aufnahmeteile doppelt so breit sind, wie der Abstand der Befestigungsbohrungen der Grundplatte.

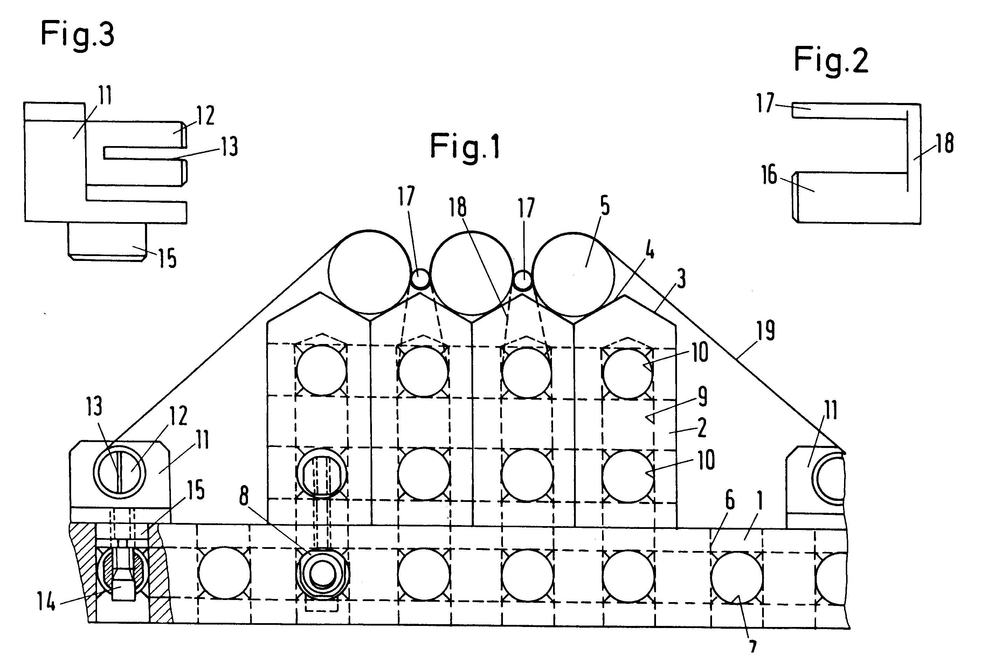

Gleiche Teile sind in der Zeichnung mit gleichen Bezugszeichen bezeichnet. In Fig. 1 sind auf einer Grundplatte 1, die grundsätzlich so aufgebaut ist wie die Grundplatte der DE-PS 35 40 221, vier Aufnahmeteile 2 angeordnet und befestigt. Die Aufnahmeteile sind im Querschnitt gezeichnet, d.h. die eine Dachform bildenden Aufspannflächen 3 und 4 sind im Querschnitt oder in der Seitenansicht erkennbar. Jeweils zwei Aufnahmeteile stützen mit ihren Aufspannflächen 3 bzw. 4 drei Werkstücke 5 mit kreisförmigem Querschnitt, d.h. vier Aufnahmeteile 2 stützen drei Werkstücke 5.

In der Grundplatte 1 sind Bohrungen 6 und Querbohrungen 7 angeordnet, damit Schrauben 8 angeordnet und die Aufnahmeteile befestigt werden können. Entsprechend sind in den Aufnahmeteilen 2 Befestigungsbohrungen 9 für die Schrauben 8 vorgesehen. Die Befestigung der Aufnahmeteile auf der Grundplatte mit Hilfe der Schrauben 8 geschieht vorzugsweise so, wie in der DE-PS 35 40 221 angegeben.

In den Seitenflächen der Aufnahmeteile sind senkrecht zu der Befestigungsbohrung 9 verlaufende Bohrungen 10 vorgesehen, in die Haken (Fig. 2) eingesetzt werden können. Diese Haken bestehen aus einem Paßstift 16, einer Lasche 18 und einem Niederhalter 17.

Weiterhin sind auf der Grundplatte mit Hilfe von Schrauben 14 zwei Aufwickelvorrichtungen 11 angeordnet, auf denen ein Zapfen 12 drehbar gelagert ist. Der Zapfen 12 kann mit Hilfe eines Werkzeuges gedreht werden, das von einem Schlitz 13 aufgenommen wird. Ein Ansatz 15 passt in die Bohrung 6 der Grundplatte.

Beim Betrachten der Fig. 1 wird deutlich, daß die drei Werkstücke 5 durch ein Spannseil, das auch ein Gurt oder ein ähnliches Spannmittel sein kann, gehalten werden. Das Spannseil 19 verläuft ungefähr 180° um die Werkstücke herum und unter dem Niederhalter 17 des Hakens hindurch und dann um das nächste Werkstück 5. Mit Hilfe der Haspeln 12 wird das Spannseil fest gespannt, so daß die Werkstücke unverrückbar festliegen. Diese Art der Abstützung eignet sich besonders bei hohen Anforderungen an die Präzision der Aufspannung und Abstützung beispielsweise in Meßmaschinen.

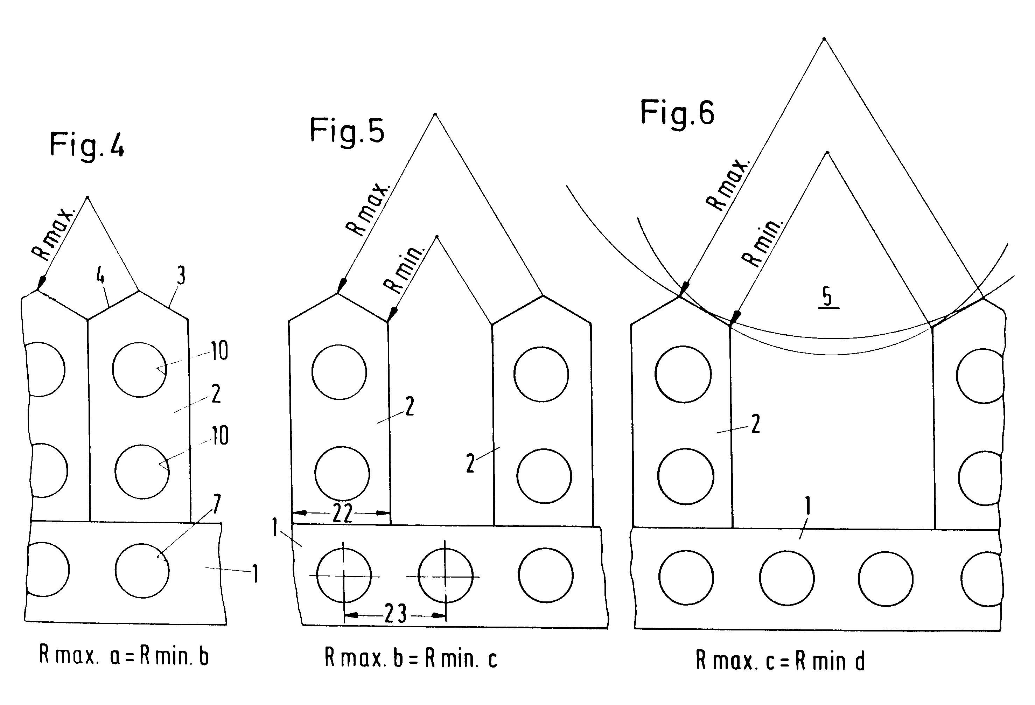

Beim Betrachten der Fig. 4 bis 6 wird deutlich, daß es mit Hilfe von zwei gleichen Aufnahmeteilen 2 mit entsprechenden Aufspannflächen 3 und 4 möglich ist, Werkstücke mit den unterschiedlichsten Durchmessern aufzuspannen und dabei lediglich den Abstand zwischen den Aufnahmeteilen 2 zu verändern. Bei dieser Ausführungsform ist der Abstand 23 der Bohrungen 6 in der Grundplatte gleich der Breite 22 der Aufnahmeteile. Der größte Werkstückdurchmesser eines Aufbaus nach Fig. 4 ist gleich dem kleinsten Werkstückdurchmesser eines Aufbaus nach Fig. 5, also um ein Rastermaß größer. Gleiches gilt sinngemäß für den Aufbau nach Fig. 6. Hieraus folgt, daß nur durch Veränderung der Positionierung in den Rastersprüngen lückenlos alle Durchmesserbereiche abgedeckt werden können.

Dadurch, daß aufgrund der Dachform beim lückenlosen Aneinanderreihen auf engstem Raum zusammenhängende Aufnahmeteilgebilde entstehen, ist eine optimale Raumausnutzung, beispielsweise des Arbeitsbereiches einer teuren, dreidimensionalen Meßmaschine, möglich.

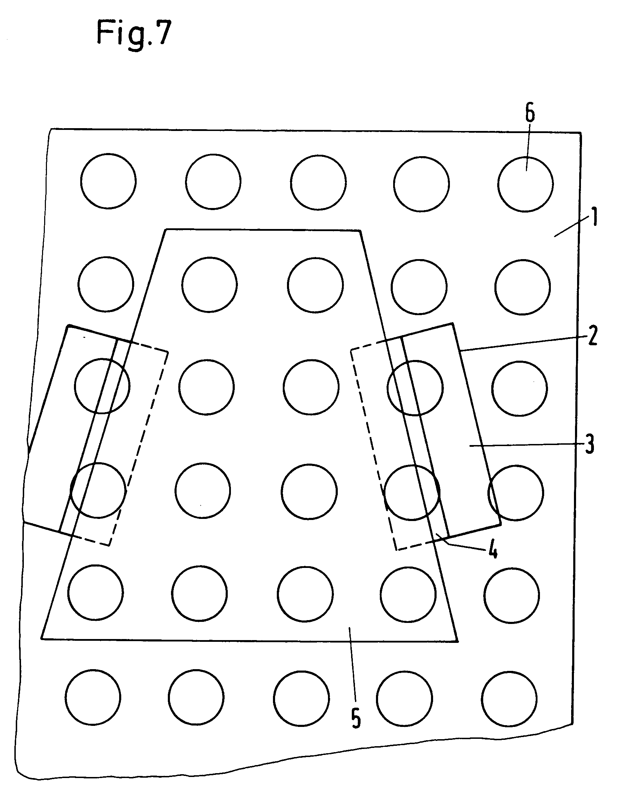

Es ist aber auch möglich, andere Werkstücke mit nicht parallelen Flächen aufzuspannen, wie in Fig. 7 dargestellt.

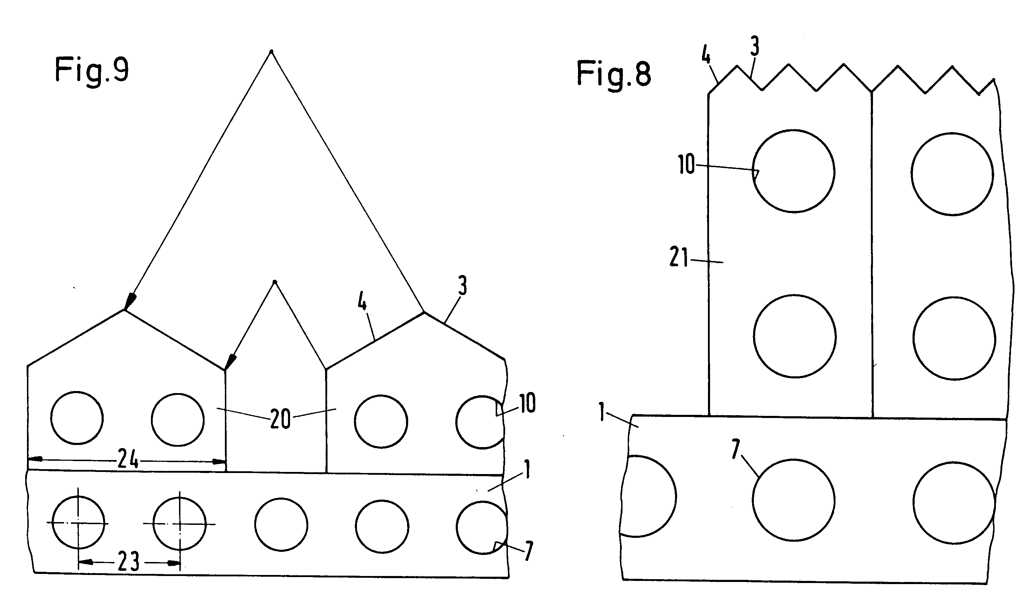

In Fig. 8 ist eine andere Ausführungsform mit insgesamt sechs Aufspannflächen 3 und 4 auf einem Aufnahmeteil 21 dargestellt.

Bei der Ausführungsform nach Fig. 9 beträgt die Breite 24 eines Aufnahmeteils 20 das Zweifache des Abstandes 23 der Befestigungsbohrung 6 in der Grundplatte 1.

Es ist leicht erkennbar, daß im Rahmen der Erfindung die unterschiedlichsten Abmessungen und Dachformen gewählt werden können. Es ist auch nicht unbedingt erforderlich, daß die beiden Dachflächen gleichgroß sind, obwohl dieses die vorgezogene Ausführungsform darstellt. Es ist aber auch eine "schiefwinklige" oder nicht symmetrische Ausbildung im Querschnitt denkbar.

Selbstverständlich ist es möglich, mit Hilfe der Aufnahmeteile nicht nur Werkstücke mit kreisförmigem, sondern auch mit eckigem Querschnitt aufzuspannen. Der Winkel der Aufspannflächen muß dann dem Winkel des Vielecks, ob nun Quadrat, Rechteck, Sechseck oder dergl. angepaßt sein.

## Patentansprüche

1. Aufspannvorrichtung mit Aufnahmeprisma für Werkstücke, mit wenigstens zwei V-förmig zueinander angeordneten ebenen Werkstückauflageflächen (3,6) und mit einer diesen gegenüberliegenden Befestigungsfläche mit Bohrungen (7) zu seiner Befestigung mittels Schrauben auf einer Grundplatte, die in regelmäßigen Koordinatenabständen angeordnete Bohrungen zur Aufnahme der Schrauben aufweist, wobei das Aufnahmeprisma aus wenigstens zwei Aufnahmeteilen (2) besteht, an denen jeweils wenigstens ein Paar ebener Werkstückauflageflächen (3,4) angeordnet sind, die im Querschnitt eine Dachform bilden,
dadurch gekennzeichnet, daß die Breite (22) der die Dachform aufweisenden Querschnittsfläche ein Einfaches oder ganzzahliges Mehrfaches des Abstandes (23) der Bohrungen (7) in der Grundplatte (1) beträgt.

2. Aufspannvorrichtung nach Anspruch 1, dadurch gekennzeichnet, daß die ein Paar bildenden Werkstückauflageflächen (3,4) eines Aufnahmeteils (2) symmetrisch angeordnet, d.h. gleichgroß sind.

3. Aufspannvorrichtung nach Anspruch 1 oder 2, dadurch gekennzeichnet, daß auf jeder Seite des oder der Werkstücke (5) eine Aufwickelvorrichtung (11) für ein Spannseil (19) zur Anpressung des oder der Werkstücke auf die Werkstückauflageflächen (3,4) angeordnet ist, und daß die Aufwickelvorrichtungen (11) durch Schrauben (14) oder dergleichen an der Grundplatte (1) und/oder den Aufnahmeteilen (2) befestigt sind.

4. Aufspannvorrichtung nach Anspruch 3, dadurch gekennzeichnet, daß zum Aufspannen mehrerer Werkstücke (5) nebeneinander zwischen diesen Haken (16 bis 18) zum Umlenken und Niederhalten des Spannseils (19) an den Aufnahmeteilen (2) befestigt sind.

5. Aufspannvorrichtung nach Anspruch 4, dadurch gekennzeichnet, daß die Haken (16 bis 18) in Bohrungen (10) in die Aufnahmeteile (2) eingehängt sind.

6. Aufspannvorrichtung nach einem oder mehreren der vorstehenden Ansprüche 3 bis 5, dadurch gekennzeichnet, daß jede Aufwickelvorrichtung (11 oder 21) einen Zapfen (12 oder 22) aufweist, der drehbar in einem Grundkörper gelagert ist und eine Aufnahme (13 oder 23) für das Spannseil (19) aufweist.

7. Aufspannvorrichtung nach Anspruch 6, dadurch gekennzeichnet, daß die Aufnahme für das Spannseil (19) ein Schlitz (13) ist, der gleichzeitig zum Drehen des Zapfens (12) durch ein Werkzeug dient.

8. Aufspannvorrichtung nach Anspruch 6 oder 7, dadurch gekennzeichnet, daß die Aufnahme für das Spannseil (19) dieses selbsthemmend hält.

## Claims

1. Clamping device with a mounting V for workpieces, having at least two V-shaped associated, planar workpiece bearing surfaces (3,4) and with a fixing surface facing the same and having holes (7) for the fixing thereof by means of screws to a base plate, which has holes arranged with regular coordinate spacings for receiving screws, the mounting V comprising at least two mounting parts (2), on each of which is arranged at least one pair of planar workpiece bearing surfaces (3,4), which in cross-section form a roof shape, characterized in that the width (22) of the cross-sectional surface having the roof shape is one or more times the spacing (23) of the holes (7) in the base plate (1).

2. Clamping device according to claim 1, characterized in that the workpiece bearing surfaces (3,4) of a mounting part (2) forming a pair are arranged symmetrically, i.e. have the same size.

3. Clamping device according to claims 1 or 2, characterized in that on each side of the workpiece or workpieces (5) is provided a bracing wire (19) for pressing the workpiece or workpieces onto the workpiece bearing surfaces (3,4) and that the winding mechanisms (11) are fixed by screws (14) or the like to the base plate (1) and/or the mounting parts (2).

4. Clamping device according to claim 3, characterized in that for clamping several workpieces (5) hooks (16 to 18) are fixed in juxtaposed manner between them for deflecting and holding down the bracing cable (19) on the mounting parts (2).

5. Clamping device according to claim 4, characterized in that the hooks (16 to 18) are hung in holes (10) in the mounting parts (2).

6. Clamping device according to one or more of the preceding claims 3 to 5, characterized in that each winding mechanism (11 or 21) has a stud (12 or 22), which is rotatably mounted in a body and has a receptacle (13 or 23) for the bracing wire (19).

7. Clamping device according to claim 6, characterized in that the receptacle for the bracing wire (19) is a slot (13), which is simultaneously used for the turning of the stud (12) by a tool.

8. Clamping device according to claims 6 or 7, characterized in that the receptacle for the bracing wire (19) holds the latter in self-locking manner.

## Revendications

1. Dispositif de serrage à prisme de préhension de pièces à usiner, comprenant au moins deux surfaces planes (3, 4) d'appui des pièces à usiner, agencées en V l'une par rapport à l'autre, et une surface de fixation située en vis-à-vis desdites surfaces et percée de trous (7) en vue de sa fixation, au moyen de vis, sur une plaque de base munie de trous disposés à espacements réguliers sel on un système de coordonnées, afin de recevoir les vis, le prisme de préhension se composant d'au moins deux parties réceptrices (2) sur lesquelles est respectivement ménagée au moins une paire de surfaces planes (3, 4) d'appui des pièces, revêtant la forme d'une toiture en coupe transversale,
caractérisé par le fait que la largeur (22) de la surface de section transversale présentant la forme d'une toiture représente un simple ou un multiple entier de l'espacement (23) des trous (7) dans la plaque de base (1).

2. Dispositif de serrage selon la revendication 1, caractérisé par le fait que les surfaces (3, 4) d'appui des pièces d'une partie réceptrice (2), qui forment une paire, sont agencées symétriquement, c'est-à-dire présentent une même dimension.

3. Dispositif de serrage selon la revendication 1 ou 2, caractérisé par le fait qu'un dispositif (11) d'enroulement d'un câble tendeur (19), conçu pour presser la ou les pièce(s) à usiner sur les surfaces (3, 4) d'appui desdites pièces, est installé de chaque côté de la ou des pièce(s) (5) à usiner ; et par le fait que les dispositifs d'enroulement (11) sont fixés, par l'intermédiaire de vis (14) ou organes similaires, à la plaque de base (1) et/ou aux parties réceptrices (2).

4. Dispositif de serrage selon la revendication 3, caractérisé par le fait que, en vue du serrage en juxtaposition de plusieurs pièces (5) à usiner, des crochets (16 à 18) sont fixés aux parties réceptrices (2), entre lesdites pièces, en vue du renvoi et de la consignation à demeure du câble tendeur (19).

5. Dispositif de serrage selon la revendication 4, caractérisé par le fait que les crochets (16 à 18) sont accrochés dans des perçages (10) pratiqués dans les parties réceptrices (2).

6. Dispositif de serrage selon l'une ou plusieurs des revendications précédentes 3 à 5, caractérisé par le fait que chaque dispositif d'enroulement (11 ou 21) présente une cheville (12 ou 22) qui est montée à rotation dans un corps de base, et comporte un logement (13 ou 23) pour le câble tendeur (19).

7. Dispositif de serrage selon la revendication 6, caractérisé par le fait que le logement destiné au câble tendeur (19) est une fente (13) servant, simultanément, à imprimer une rotation à la cheville (12) par l'intermédiaire d'un outil.

8. Dispositif de serrage selon la revendication 6 ou 7, caractérisé par le fait que le logement destiné au câble tendeur (19) retient ce dernier par autoblocage.
